# EUROPÄISCHE PATENTSCHRIFT

(11) **EP 3 596 501 B1**
(45) Veröffentlichungstag und Bekanntmachung des Hinweises auf die Patenterteilung: **02.12.2020**
(21) Anmeldenummer: 18720192.6
(22) Anmeldetag: 18.04.2018
(51) Int. Cl.: G01S 17/02, G01S 17/10, G01S 17/87, G01S 7/20, G01S 13/06, G01S 13/72, G01S 13/86, H01Q 21/06, G01S 17/66, G01S 17/89, G01S 7/481, G01S 17/86, G01S 17/894

(54) **SENSOR-VORRICHTUNG ZUR DREIDIMENSIONALEN ERFASSUNG VON ZIELOBJEKTEN**
SENSOR DEVICE FOR THE THREE-DIMENSIONAL DETECTION OF TARGET OBJECTS
DISPOSITIF DE DÉTECTION SERVANT À ACQUÉRIR DES IMAGES TRIDIMENSIONNELLES D'OBJETS CIBLES

(30) Priorität: 27.04.2017 DE 102017109056
(43) Veröffentlichungstag der Anmeldung: 22.01.2020
(73) Patentinhaber: Rheinmetall Electronics GmbH, 28309 Bremen (DE)
(72) Erfinder: LEHMANN, Christian, 28309 Bremen (DE)
(74) Vertreter: Horn Kleimann Waitzhofer Patentanwälte PartG mbB
(86) Internationale Anmeldenummer: PCT/EP2018/059954
(87) Internationale Veröffentlichungsnummer: WO 2018/197310

(56) Entgegenhaltungen:
- DE-B3-102014 100 245
- US-A1- 2009 251 680
- US-A1- 2013 342 657
- US-A1- 2016 266 246

## Beschreibung

Die vorliegende Erfindung betrifft eine Sensor-Vorrichtung zur dreidimensionalen Erfassung von Zielobjekten, beispielsweise von Flugzeugen.

Das technische Gebiet der Erfindung betrifft die Erfassung von Zielobjekten. Hierbei sind Sensor-Vorrichtungen zur zweidimensionalen Erfassung von Zielobjekten bekannt, beispielsweise basierend auf Infrarot. In diesem Zusammenhang hat die Anmelderin ein Infrarot-Überwachungssystem für den Rundumbetrieb mit sehr kurzen Reaktionszeiten entwickelt. Dieses Infrarot-Überwachungssystem ist unter dem Namen FIRST (Fast InfraRed Search and Track) bekannt. Wesentliche Leistungseigenschaften von FIRST sind eine hohe Sensorempfindlichkeit des eingesetzten Zeilensensors mit einer hieraus resultierenden großen Reichweite. Aufgrund einer großen Elevationsabdeckung von 18° und der sehr hohen Auflösung ist FIRST in der Lage, Zielobjekte, wie Flugzeuge, z. B. Strahlflugzeuge, Hubschrauber, Marschflugkörper sowie unterschiedliche Munitionsarten, Fahrzeuge und Personen, zu detektieren.

FIRST besteht aus einem Sensorkopf, einer Signalverarbeitungseinheit mit einem leistungsfähigen Multi-Mode-Tracker (MMT) und einer Benutzeroberfläche. Die von FIRST aufgenommenen Bilddaten können in Echtzeit verarbeitet werden. Mögliche Zielobjekte werden anhand ihrer charakteristischen Merkmale lokalisiert, klassifiziert und ihren Spuren (Tracks) zugeordnet. Die Zielobjekte werden mit den entsprechenden Symbolen versehen und mit den ermittelten Daten dem Bediener oder Operator auf einem Anzeigegerät dargestellt.

FIRST ist als Alarmierungssystem zum Schutz von militärischen und zivilen Objekten gegen Bedrohung aus der Luft und vom Boden geeignet. Allerdings ist FIRST lediglich zur zweidimensionalen Erfassung von Zielobjekten eingerichtet.

Das Dokument US 2016/266246 A1 zeigt ein System zum Überwachen einer maritimen Umgebung. Das System umfasst eine Vielzahl von Erfassungsvorrichtungen zum Erfassen von Objekten in der maritimen Umgebung, wobei die Erfassungsvorrichtungen zum Erfassen von Objekten gemäß verschiedenen Objekterfassungsschemata konfiguriert sind, und eine Datenverarbeitungsvorrichtung mit einer Kommunikationsschnittstelle und einem Prozessor. Dabei ist die Kommunikationsschnittstelle derart konfiguriert, dass sie Erfassungssignale von den Erfassungsvorrichtungen empfängt, und wobei der Prozessor so konfiguriert ist, dass er Positionen der Objekte in der maritimen Umgebung auf der Grundlage der empfangenen Erfassungssignale in einem gemeinsamen Koordinatensystem bestimmt.

Vor diesem Hintergrund besteht eine Aufgabe der vorliegenden Erfindung darin, die Erfassung von Zielobjekten zu verbessern.

Demgemäß wird eine Sensor-Vorrichtung zur dreidimensionalen Erfassung von Zielobjekten vorgeschlagen. Die Sensor-Vorrichtung umfasst einen 360°-Sensor, eine Erkennungs-Einheit und einen Laserentfernungsmesser. Der 360°-Sensor ist dazu eingerichtet, elektromagnetische Strahlung zur Bereitstellung von zweidimensionalen Bildern einer Umgebung des 360°-Sensors zu erfassen. Die Erkennungs-Einheit ist zum Detektieren von bestimmten Zielobjekten in den von dem 360°-Sensor bereitgestellten zweidimensionalen Bildern eingerichtet. Der Laserentfernungsmesser ist zum Bestimmen einer jeweiligen Entfernung des jeweiligen Zielobjekts eingerichtet. Der Laserentfernungsmesser umfasst eine Laserdiode zum Aussenden eines Laserstrahls, einen Spiegel zum Reflektieren des ausgesendeten Laserstrahls auf das jeweilige Zielobjekt und einen Piezo-Aktor, welcher dazu eingerichtet ist, den Spiegel zumindest in Elevation derart auszurichten, dass der von dem Spiegel reflektierte Laserstrahl das jeweilige Zielobjekt beleuchtet.

Durch die Kombination des 360°-Sensors und des vorliegenden Laserentfernungsmessers kann aus den von dem 360°-Sensor bereitgestellten zweidimensionalen Bildern eine dreidimensionale Darstellung, insbesondere ein 3D-Lagebild, erstellt werden. Somit ist die vorliegende Sensor-Vorrichtung ein 3D-Sensor und ermöglicht eine 3D-Rundumsicht, welche ein genaues Lagebild der Umgebung in Echtzeit bereitstellen kann.

Die Sensor-Vorrichtung ist dabei als ein rotierender 360°-Sensor ausgebildet, wobei der 360°-Sensor beispielsweise als Sensorkopf ausgebildet ist, auf welchem der Laserentfernungsmesser montiert ist. Der Laserentfernungsmesser ist insbesondere in Azimut mit dem 360°-Sensor ausgerichtet. Neben der Laserdiode des Laserentfernungsmessers ist vorzugsweise in negativer Drehrichtung eine Photodiode oder ein photosensitiver Sensor angebracht.

Insbesondere umfasst die Erkennung-Einheit zum Detektieren von bestimmten Zielobjekten in den von dem 360°-Sensor bereitgestellten zweidimensionalen Bildern eine Tracking-Einheit. Die Tracking-Einheit kann auch als Tracker bezeichnet werden. Wird ein Zielobjekt von der Tracking-Einheit erkannt, so können die Elevations-Daten und die Azimut-Daten gespeichert werden. Bei der nächsten Umdrehung der Sensor-Vorrichtung kann der Laserstrahl durch den Laserentfernungsmesser in Richtung des Zielobjekts ausgesandt werden. Beispielsweise kann der Laserstrahl aus mehreren Laserpulsen mit zufällig errechneten Abständen ausgebildet sein. Dabei werden die Laserpulse von der Laserdiode ausgesandt, welche auf den beweglichen Spiegel emittiert. Der Spiegel wird derart mittels des Piezo-Aktors bewegt, so dass die Laserpulse das Zielobjekt treffen. Durch die Ausbildung des Laserstrahls aus Laserpulsen ist es vorteilhafterweise möglich, dass die benötigte Laserleistung verringert wird. Unter Piezo-Aktor wird vorliegend auch eine Anordnung mit einer Mehrzahl von Piezo-Aktuatoren verstanden.

Die Winkelgeschwindigkeit der Sensor-Vorrichtung wird vorzugsweise kompensiert, und die Elevation wird durch die Winkelstellung kompensiert, um das Zielobjekt mittels des Laserstrahls zu treffen. Beispielsweise am Gehäuse des Laserentfernungsmessers ist seitlich eine Photodiode angebracht, welche die zurückgestreuten Laserpulse empfangen kann. Die Photodiode ist beispielsweise eine Avalanche-Photodiode.

Beim Weiterdrehen der Sensor-Vorrichtung empfängt die Photodiode die zurückgestreuten Laserpulse. Dabei wird vorzugsweise durch die Laufzeit der Laserpulse die Entfernung zum Zielobjekt bestimmt.

Der 360°-Sensor ist insbesondere ein strahlungsempfindlicher Detektor, insbesondere Halbleiter-Detektor, welcher ein eindimensionales Array aus Photodetektoren oder anderen Detektorelementen umfasst.

Gemäß einer Ausführungsform weist die Sensor-Vorrichtung eine Ausgabe-Einheit auf, welche dazu eingerichtet ist, ein dreidimensionales Bild der Umgebung mit den bestimmten Zielobjekten und deren jeweiligen Entfernungen mittels der von dem 360°-Sensor bereitgestellten zweidimensionalen Bilder und mittels den von dem Laserentfernungsmesser bestimmten Entfernungen auszugeben. Die Ausgabe-Einheit kann Teil einer Signalverarbeitungseinheit oder einer Recheneinrichtung sein. Die Ausgabe-Einheit generiert das dreidimensionale Bild aus den zweidimensionalen Bildern, den bestimmten Zielobjekten und deren jeweiligen bestimmten Entfernungen.

Gemäß einer weiteren Ausführungsform weist der Laserentfernungsmesser eine Photodiode zum Empfangen zumindest eines Teils eines von dem Zielobjekt zurückgestreuten Laserstrahls auf. Insbesondere ist die Photodiode eine Avelanche-Photodiode.

Gemäß einer weiteren Ausführungsform umfasst der Laserentfernungsmesser eine Ermittlungs-Einheit, welche dazu eingerichtet ist, die Entfernung des jeweiligen Zielobjekts in Abhängigkeit des von der Photodiode empfangenen Teils des von dem Zielobjekt zurückgestreuten Laserstrahls zu ermitteln. Zur Ermittlung oder Berechnung der Entfernung nutzt die Ermittlungs-Einheit die bestimmte Laufzeit des Laserstrahls von dem Laserentfernungsmesser zu dem Zielobjekt und zurück.

Gemäß einer weiteren Ausführungsform ist die Photodiode außen auf einem Gehäuse des Laserentfernungsmessers angeordnet. Bei der Anordnung der Photodiode außen auf dem Gehäuse des Laserentfernungsmessers wird die Photodiode insbesondere in negativer Drehrichtung neben der Laserdiode angeordnet.

Gemäß einer weiteren Ausführungsform sind die Photodiode und der Spiegel derart relativ zueinander angeordnet, dass der zumindest eine Teil des von dem Zielobjekt zurückgestreuten Laserstrahls von dem Spiegel auf die Photodiode umgelenkt wird. Durch diese relative Anordnung von Photodiode und Spiegel ist sichergestellt, dass zumindest Teile des zurückgestreuten Laserstrahls von der Photodiode empfangen werden können.

Gemäß einer weiteren Ausführungsform ist die Photodiode auf dem Spiegel angeordnet. Diese Ausführungsform ist vorteilhafterweise sehr platzsparend.

Gemäß einer weiteren Ausführungsform ist der Piezo-Aktor dazu eingerichtet, den Spiegel in Elevation und in Azimut derart auszurichten, dass der von dem Spiegel reflektierte Laserstrahl das jeweilige Zielobjekt beleuchtet. Bei dieser Ausführungsform kann der Piezo-Aktor den Spiegel sowohl in Elevation als auch in Azimut auf das Zielobjekt ausrichten. Diese Ausführungsform ist vorteilhaft, weil sie sehr präzise bei der Ausrichtung der Laseremission ist und damit zu einem verbesserten Signal-Rausch-Verhältnis führt. Dieses führt wiederum zu einer Verbesserung bei der Bestimmung der Entfernung des Zielobjekts zu dem Laserentfernungsmesser.

Gemäß einer weiteren Ausführungsform ist der Laserentfernungsmesser dazu eingerichtet, den Laserstrahl mit einer Mehrzahl N von codierten Signaturen zur Differenzierung einer Mehrzahl N von Zielobjekten auszustrahlen. Durch die Verwendung von codierten Signaturen in dem Laserstrahl ist es möglich, eine Mehrzahl von Zielobjekten unterscheiden zu können und damit Entfernungen der Mehrzahl von Zielobjekten bestimmen zu können.

Gemäß einer weiteren Ausführungsform sind der 360°-Sensor und der Laserentfernungsmesser zentrisch zueinander angeordnet.

Gemäß einer weiteren Ausführungsform haben der 360°-Sensor und der Laserentfernungsmesser eine gemeinsame Rotationsachse. Die zentrische Anordnung des 360°-Sensors und des Laserentfernungsmessers und die gemeinsame Rotationsachse haben den Vorteil, dass die dreidimensionale Rundumsicht besonders präzise und einfach bereitgestellt werden kann.

Gemäß einer weiteren Ausführungsform ist der 360°-Sensor als ein 360°-Zeilensensor oder als ein 360°-Flächensensor ausgebildet. Insbesondere ist der 360°-Sensor ein Infrarot-Sensor.

Gemäß einer weiteren Ausführungsform ist der 360°-Sensor dazu eingerichtet, das zweidimensionale Bild mit einer vorbestimmten Frequenz zwischen 0,1 Hz und 10 Hz, bevorzugt mit 5 Hz, bereitzustellen.

Gemäß einer weiteren Ausführungsform ist der 360°-Sensor dazu eingerichtet, mit den bereitgestellten zweidimensionalen Bildern eine durchgehende Azimut-Abdeckung bereitzustellen.

Gemäß einer weiteren Ausführungsform ist der 360°-Sensor dazu eingerichtet, eine einstellbare Elevation-Abdeckung in einem Bereich zwischen -20° und 30° bereitzustellen.

Die jeweilige Einheit, zum Beispiel die Erkennungs-Einheit oder die Ermittlungs-Einheit, kann hardwaretechnisch und/oder auch softwaretechnisch implementiert sein. Bei einer hardwaretechnischen Implementierung kann die Einheit als Vorrichtung oder als Teil einer Vorrichtung, zum Beispiel als Computer oder als Mikroprozessor ausgebildet sein. Bei einer softwaretechnischen Implementierung kann die Einheit als Computerprogrammprodukt, als eine Funktion, als eine Routine, als Teil eines Programmcodes oder als ausführbares Objekt ausgebildet sein.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikations-Netzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische Ansicht eines ersten Ausführungsbeispiels einer Sensor-Vorrichtung zur dreidimensionalen Erfassung von Zielobjekten;
- Fig. 2: zeigt eine schematische Ansicht eines Ausführungsbeispiels eines Laserentfernungsmessers der Sensor-Vorrichtung nach Fig. 1;
- Fig. 3: zeigt eine schematische Ansicht einer Emission und einer Absorption durch den Laserentfernungsmesser nach Fig. 2;
- Fig. 4: zeigt eine schematische Ansicht eines zweiten Ausführungsbeispiels einer Sensor-Vorrichtung zur dreidimensionalen Erfassung von Zielobjekten; und
- Fig. 5: zeigt ein schematisches Ausführungsbeispiel eines Spiegels eines Laserentfernungsmessers.

In den Figuren sind gleiche oder funktionsgleiche Elemente mit denselben Bezugszeichen versehen worden, sofern nichts anderes angegeben ist.

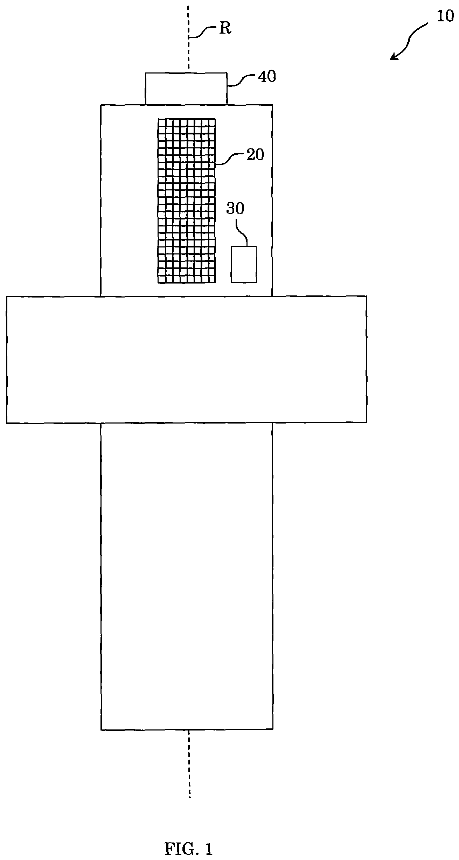

In Fig. 1 ist eine schematische Ansicht eines ersten Ausführungsbeispiels einer Sensor-Vorrichtung 10 zur dreidimensionalen Erfassung von Zielobjekten dargestellt.

Die Sensor-Vorrichtung 10 der Fig. 1 umfasst einen 360°-Sensor 20, eine Erkennungs-Einheit 30 sowie einen Laserentfernungsmesser 40.

Der 360°-Sensor 20 ist dazu eingerichtet, elektromagnetische Strahlung zur Bereitstellung von zweidimensionalen Bildern einer Umgebung des 360°-Sensors 20 zu erfassen. Dabei der rotiert der 360°-Sensor 20 um eine Rotationsachse R und nimmt mit einer bestimmten Frequenz, beispielsweise mit 5 Hz, die zweidimensionalen Bilder der Umgebung auf. Der 360°-Sensor 20 ist beispielsweise ein 360°-Infrarot-Flächensensor. Der 360°-Sensor 20 kann auch ein 360°-Infrarot-Zeilensensor sein.

Insbesondere ist der 360°-Sensor 20 dazu eingerichtet, mit den bereitgestellten zweidimensionalen Bildern eine durchgehende Azimut-Abdeckung bereitzustellen. Weiterhin ist der 360°-Sensor 20 vorzugsweise dazu eingerichtet, eine einstellbare Elevation-Abdeckung in einem Bereich zwischen 10° und 20° bereitzustellen.

Insbesondere haben der 360°-Sensor 20 und der Laserentfernungsmesser 40 die Rotationsachse R als gemeinsame Rotationsachse und sind damit vorzugsweise zentrisch zueinander angeordnet.

Die Erkennungs-Einheit 30 ist dazu eingerichtet, bestimmte Zielobjekte, beispielsweise Flugzeuge, Drohnen oder Geschosse, in den von dem 360°-Sensor 20 bereitgestellten zweidimensionalen Bildern zu detektieren. Die Erkennungs-Einheit 30 ist beispielsweise - wie in Fig. 1 gezeigt - in dem 360°-Sensor 20 integriert. Die Erkennungs-Einheit 30 kann auch extern zu dem 360°-Sensor 20 angeordnet sein (nicht gezeigt).

Die Erkennungs-Einheit 30 kann auch eine Tracker-Einheit (nicht gezeigt) umfassen, welche dazu eingerichtet ist, eines oder mehrere der bestimmten Zielobjekte zu tracken, d. h. diese Zielobjekte zu verfolgen.

Der Laserentfernungsmesser 40 ist dazu eingerichtet, eine jeweilige Entfernung des jeweiligen bestimmten Zielobjekts zu bestimmen.

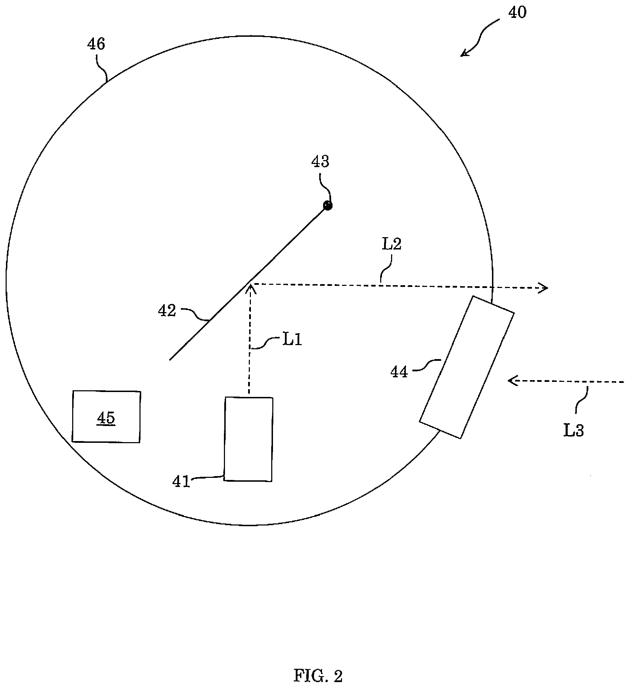

Hierzu zeigt die Fig. 2 eine schematische Ansicht eines Ausführungsbeispiels des Laserentfernungsmessers 40. Der Laserentfernungsmesser 40 umfasst eine Laserdiode 41, einen Spiegel 42, einen Piezo-Aktor 43, eine Photodiode 44, eine Ermittlungs-Einheit 45 und ein Gehäuse 46 auf.

Die Laserdiode 41 ist dazu eingerichtet, einen Laserstrahl L1 auszusenden. Der Spiegel 42 ist derart angeordnet, dass er den von der Laserdiode 41 ausgesendeten Laserstrahl L1 auf das jeweilige Zielobjekt reflektiert. Der Piezo-Aktor 43 ist dazu eingerichtet, den Spiegel 42 zumindest in Elevation und vorzugweise zusätzlich in Azimut derart auszurichten, dass der von dem Spiegel 42 reflektierte Laserstrahl L2 das jeweilige Zielobjekt beleuchtet.

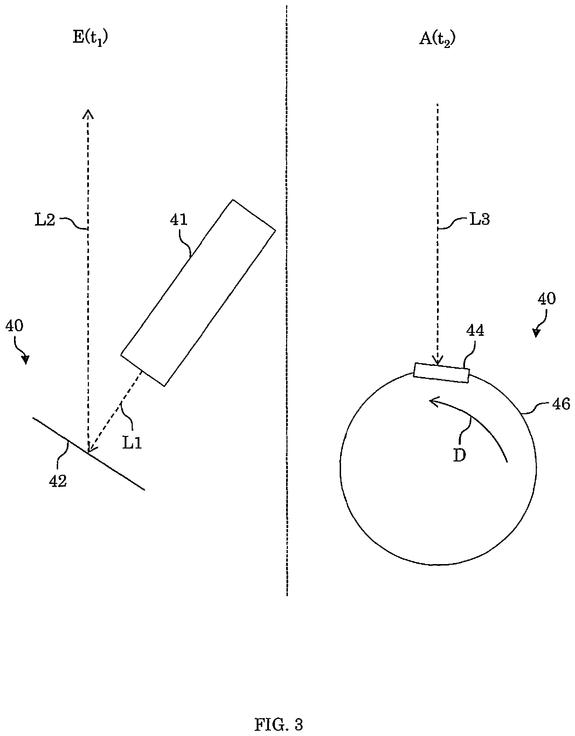

Die Photodiode 44 ist dazu eingerichtet, zumindest einen Teil des von dem Zielobjekt zurückgestreuten Laserstrahls L3 zu empfangen (siehe hierzu Fig. 3).

Die Ermittlungs-Einheit 45 ist dazu eingerichtet, die Entfernung des jeweiligen Zielobjekts in Abhängigkeit des von der Photodiode 44 empfangenen Teils des von dem Zielobjekt zurückgestreuten Laserstrahls L3 zu ermitteln bzw. zu berechnen.

In dem Beispiel der Fig. 2 ist die Photodiode 44 außen auf dem Gehäuse 46 des Laserentfernungsmessers 40 angeordnet.

Insbesondere sind die Photodiode 44 und der Spiegel 42 derart relativ zueinander angeordnet, dass der zumindest eine Teil des von dem Zielobjekt zurückgestreuten Laserstrahls L3 von dem Spiegel 42 auf die Photodiode 44 umgelenkt wird.

Ein Beispiel für eine Emission und eine Absorption durch den Laserentfernungsmesser 40 ist in Fig. 3 dargestellt. Dabei ist im linken Teil der Fig. 3 die Emission der Laserdiode 41 des Laserentfernungsmessers 40 zu einem Zeitpunkt t1 mit E(t1) bezeichnet, wohingegen der rechte Teil der Fig. 3 die Absorption A(t2) zu einem späteren Zeitpunkt t2 des zurückgestreuten Laserstrahls L3 zeigt.

Der linke Teil der Fig. 3 zeigt, dass bei der Emission E(t1) ein Laserstrahl L1 von der Laserdiode 41 ausgesendet wird, wobei der Spiegel 42 diesen ausgesendeten Laserstrahl L1 reflektiert und damit einen reflektierten Laserstrahl L2 bereitstellt, welcher das Zielobjekt beleuchtet.

Demgegenüber zeigt der rechte Teil der Fig. 3 die Absorption A(t2) zum Zeitpunkt t2, bei welchem der von dem Zielobjekt zurückgestreute Laserstrahl L3 von der Photodiode 44 empfangen wird. In der Fig. 3 zeigt der Pfeil D die Drehrichtung des Laserentfernungsmessers 40 an.

Wie oben ausgeführt, sind der 360°-Sensor 20 und der Laserentfernungsmesser 40 zentrisch zueinander angeordnet und haben die Achse R als gemeinsame Rotationsachse. Damit ist auch der Laserentfernungsmesser 40 wie der 360°-Sensor 20 um 360° mit einer vorbestimmten Drehgeschwindigkeit drehbar. Da sich in der 360°-Umgebung der vorliegenden Sensor-Vorrichtung 10 eine Vielzahl von Zielobjekten befinden kann, ist der Laserentfernungsmesser 40 vorzugsweise dazu eingerichtet, den Laserstrahl L1, L2 mit einer Mehrzahl N von codierten Signaturen zur Differenzierung einer Mehrzahl M von Zielobjekten auszustrahlen. Dabei ist vorzugsweise eine bestimmte der codierten Signaturen eineindeutig einem der Mehrzahl M von Zielobjekten zugeordnet.

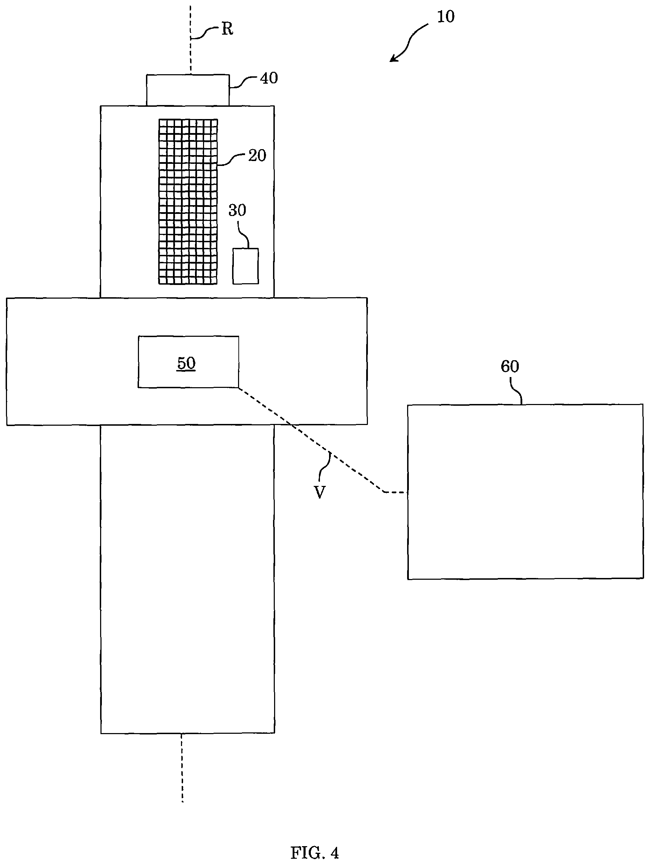

In Fig. 4 ist eine schematische Ansicht eines zweiten Ausführungsbeispiels einer Sensor-Vorrichtung 10 zur dreidimensionalen Erfassung von Zielobjekten dargestellt.

Das zweite Ausführungsbeispiel der Fig. 4 basiert auf dem ersten Ausführungsbeispiel der Fig. 1 und umfasst sämtliche Merkmale der Sensor-Vorrichtung 10 der Fig. 1. Darüber hinaus umfasst die Sensor-Vorrichtung 10 der Fig. 4 eine Ausgabe-Einheit 50. Die Ausgabe-Einheit 50 ist dazu eingerichtet, ein dreidimensionales Bild der Umgebung mit den bestimmten Zielobjekten und den jeweiligen Entfernungen mittels der von dem 360°-Sensor 20 bereitgestellten zweidimensionalen Bilder und mittels den von dem Laserentfernungsmesser 40 bestimmten Entfernungen auszugeben. Die Ausgabe-Einheit 50 ist vorzugsweise mit einer Darstellungseinrichtung 60 über eine Datenverbindung V, beispielsweise über WLAN, über LAN und/oder über Internet, verbunden. Die Darstellungseinrichtung 60 umfasst beispielsweise eine Anzahl von Bildschirmen oder Monitoren, welche dazu eingerichtet sind, das dreidimensionale Bild, welches von der Ausgabe-Einheit 50 bereitgestellt wird, an einen Nutzer auszugeben.

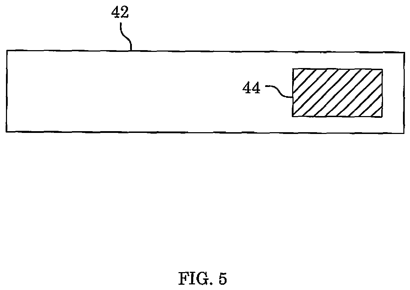

Die Fig. 5 zeigt ein schematisches Ausführungsbeispiel eines Spiegels 42 eines Laserentfernungsmessers 40. In dem Ausführungsbeispiel der Fig. 2 ist die Photodiode 44 auf dem Gehäuse 46 des Laserentfernungsmessers 40 angeordnet. Demgegenüber ist in dem Ausführungsbeispiel der Fig. 5 die Photodiode 44 auf dem Spiegel 42 angeordnet. Folglich kann gemäß diesem Ausführungsbeispiel der Fig. 5 der Piezo-Aktor 43 sowohl den Spiegel 42 als auch die Photodiode 44 in Elevation und vorzugsweise zusätzlich in Azimut verstellen.

Obwohl die vorliegende Erfindung anhand von Ausführungsbeispielen beschrieben wurde, ist sie vielfältig modifizierbar.

### BEZUGSZEICHENLISTE

- 10: Sensor-Vorrichtung
- 20: 360°-Sensor
- 30: Erkennungs-Einheit
- 40: Laserentfernungsmesser
- 41: Laserdiode
- 42: Spiegel
- 43: Piezo-Aktor
- 44: Photodiode
- 45: Ermittlungs-Einheit
- 46: Gehäuse
- 50: Ausgabe-Einheit
- 60: Darstellungseinrichtung
- L1: ausgesendeter Laserstrahl
- L2: reflektierter Laserstrahl
- L3: zurückgestreuter Laserstrahl
- R: Rotationsachse
- D: Drehrichtung
- V: Datenverbindung

## Patentansprüche

1. Sensor-Vorrichtung (10) zur dreidimensionalen Erfassung von Zielobjekten, mit:
einem 360°-Sensor (20), welcher dazu eingerichtet ist, elektromagnetische Strahlung zur Bereitstellung von zweidimensionalen Bildern einer Umgebung des 360°-Sensors (20) zu erfassen,
einer Erkennungs-Einheit (30) zum Detektieren von bestimmten Zielobjekten in den von dem 360°-Sensor (20) bereitgestellten zweidimensionalen Bildern, und
einem Laserentfernungsmesser (40) zum Bestimmen einer jeweiligen Entfernung des jeweiligen Zielobjekts, wobei der Laserentfernungsmesser (40) aufweist:
eine Laserdiode (41) zum Aussenden eines Laserstrahls (L1),
einen Spiegel (42) zum Reflektieren des ausgesendeten Laserstrahls (L1) auf das jeweilige Zielobjekt, und
einen Piezo-Aktor (43), welcher dazu eingerichtet ist, den Spiegel (42) zumindest in Elevation derart auszurichten, dass der von dem Spiegel (42) reflektierte Laserstrahl (L2) das jeweilige Zielobjekt beleuchtet,
wobei der 360°-Sensor (20) und der Laserentfernungsmesser (40) eine gemeinsame Rotationsachse (R) haben.

2. Sensor-Vorrichtung nach Anspruch 1,
**gekennzeichnet durch**
eine Ausgabe-Einheit (50), welche dazu eingerichtet ist, ein dreidimensionales Bild der Umgebung mit den bestimmten Zielobjekten und deren jeweiligen Entfernungen mittels der von dem 360°-Sensor (20) bereitgestellten zweidimensionalen Bildern und mittels den von dem Laserentfernungsmesser (40) bestimmten Entfernungen auszugeben.

3. Sensor-Vorrichtung nach Anspruch 1 oder 2,
**dadurch gekennzeichnet,**
**dass** der Laserentfernungsmesser (40) eine Photodiode (44) zum Empfangen zumindest eines Teils eines von dem Zielobjekt zurückgestreuten Laserstrahls (L3) aufweist.

4. Sensor-Vorrichtung nach Anspruch 3,
**dadurch gekennzeichnet,**
**dass** der Laserentfernungsmesser (40) eine Ermittlungs-Einheit (45) umfasst, welche dazu eingerichtet ist, die Entfernung des jeweiligen Zielobjekts in Abhängigkeit des von der Photodiode (44) empfangenen Teils des von dem Zielobjekt zurückgestreuten Laserstrahls (L3) zu ermitteln.

5. Sensor-Vorrichtung nach Anspruch 3 oder 4,
**dadurch gekennzeichnet,**
**dass** die Photodiode (44) außen auf einem Gehäuse (46) des Laserentfernungsmessers (40) angeordnet ist.

6. Sensor-Vorrichtung nach einem der Ansprüche 3 bis 5,
**dadurch gekennzeichnet,**
**dass** die Photodiode (44) und der Spiegel (42) derart relativ zueinander angeordnet sind, dass der zumindest eine Teil des von dem Zielobjekt zurückgestreuten Laserstrahls (L3) von dem Spiegel (42) auf die Photodiode (44) umgelenkt wird.

7. Sensor-Vorrichtung nach Anspruch 3 oder 4,
**dadurch gekennzeichnet,**
**dass** die Photodiode (44) auf dem Spiegel (42) angeordnet ist.

8. Sensor-Vorrichtung nach einem der Ansprüche 1 bis 7,
**dadurch gekennzeichnet,**
**dass** der Piezo-Aktor (43) dazu eingerichtet ist, den Spiegel (42) in der Elevation und in Azimut derart auszurichten, dass der von dem Spiegel (42) reflektierte Laserstrahl (L2) das jeweilige Zielobjekt beleuchtet.

9. Sensor-Vorrichtung nach einem der Ansprüche 1 bis 8,
**dadurch gekennzeichnet,**
**dass** der Laserentfernungsmesser (40) dazu eingerichtet ist, den Laserstrahl (L1, L2) mit einer Mehrzahl N von codierten Signaturen zur Differenzierung einer Mehrzahl N von Zielobjekten auszustrahlen.

10. Sensor-Vorrichtung nach einem der Ansprüche 1 bis 9,
**dadurch gekennzeichnet,**
**dass** der 360°-Sensor (20) und der Laserentfernungsmesser (40) zentrisch zueinander angeordnet sind.

11. Sensor-Vorrichtung nach einem der Ansprüche 1 bis 10,
**dadurch gekennzeichnet,**
**dass** die Laserdiode (41) dazu eingerichtet ist, den Laserstrahl (L1) mit einer Wellenlänge von zumindest 700 nm, bevorzugt von zumindest 850 nm, besonders bevorzugt von zumindest 1100 nm, auszustrahlen und zu empfangen.

12. Sensor-Vorrichtung nach einem der Ansprüche 1 bis 11,
**dadurch gekennzeichnet,**
**dass** der 360°-Sensor (20) als ein 360°- Zeilensensor oder als ein 360°-Flächensensor ausgebildet ist.

13. Sensor-Vorrichtung nach einem der Ansprüche 1 bis 12,
**dadurch gekennzeichnet,**
**dass** der 360°-Sensor (20) dazu eingerichtet ist, das zweidimensionale Bild mit einer vorbestimmten Frequenz zwischen 0,1 Hz und 10 Hz, bevorzugt mit 5 Hz, bereitzustellen.

14. Sensor-Vorrichtung nach einem der Ansprüche 1 bis 13,
**dadurch gekennzeichnet,**
**dass** der 360°-Sensor (20) dazu eingerichtet ist, mit den bereitgestellten zweidimensionalen Bildern eine durchgehende Azimut-Abdeckung bereitzustellen.

15. Sensor-Vorrichtung nach einem der Ansprüche 1 bis 14,
**dadurch gekennzeichnet,**
**dass** der 360°-Sensor (20) dazu eingerichtet ist, eine einstellbare Elevation-Abdeckung in einem Bereich zwischen -20° und 30° oder zwischen 10° und 20° bereitzustellen.

## Claims

1. Sensor apparatus (10) for three-dimensional detection of target objects, comprising:
a 360°-sensor (20) which is configured to detect electromagnetic radiation for providing two-dimensional images of an environment of the 360°-sensor (20),
a recognition unit (30) for detecting specific target objects in the two-dimensional images provided by the 360°-sensor (20), and
a laser rangefinder (40) for determining a respective distance of the respective target object, wherein the laser rangefinder (40) includes:
a laser diode (41) for emitting a laser beam (L1),
a mirror (42) for reflecting the emitted laser beam (L1) onto the respective target object, and
a piezo actor (43) which is configured to align the mirror (42) at least in elevation such that the laser beam (L2) reflected by the mirror (42) illuminates the respective target object,
wherein the 360°-sensor (20) and the laser rangefinder (40) have a common axis of rotation (R).

2. Sensor apparatus according to claim 1,
**characterized by**
an output unit (50) which is configured to output a three-dimensional image of the environment with the specific target objects and their respective distances by means of the two-dimensional images provided by the 360°-sensor (20) and by means of the distances determined by the laser rangefinder (40).

3. Sensor apparatus according to claim 1 or 2,
**characterized in**
**that** the laser rangefinder (40) includes a photo diode (44) for receiving at least a part of a laser beam (L3) backscattered by the target object.

4. Sensor apparatus according to claim 3,
**characterized in**
**that** the laser rangefinder (40) comprises an identification unit (45) which is configured to identify the distance of the respective target object in dependence on the part received from the photodiode (44) of the laser beam (L3) backscattered by the target object.

5. Sensor apparatus according to claim 3 or 4,
**characterized in**
**that** the photodiode (44) is arranged on the outside on a case (46) of the laser rangefinder (40).

6. Sensor apparatus according to one of claims 3 to 5,
**characterized in**
**that** the photodiode (44) and the mirror (42) are arranged relatively to each other such that the at least one part of the laser beam (L3) backscattered by the target object is deflected from the mirror (42) to the photodiode (44).

7. Sensor apparatus according to claim 3 or 4,
**characterized in**
**that** the photodiode (44) is arranged on the mirror (42).

8. Sensor apparatus according to one of claims 1 to 7,
**characterized in**
**that** the piezo actor (43) is configured to align the mirror (42) in elevation and azimuth such that the laser beam (L2) reflected by the mirror (42) illuminates the respective target object.

9. Sensor apparatus according to one of claims 1 to 8,
**characterized in**
**that** the laser rangefinder (40) is configured to emit the laser beam (L1, L2) with a plurality N of coded signatures for differentiating a plurality N of target objects.

10. Sensor apparatus according to one of claims 1 to 9,
**characterized in**
**that** the 360°-sensor (20) and the laser rangefinder (40) are arranged centrically to each other.

11. Sensor apparatus according to one of claims 1 to 10,
**characterized in**
**that** the laser diode (41) is configured to emit and receive the laser beam (L1) with a wavelength of at least 700 nm, preferably of at least 850 nm, more preferably of at least 1100 nm.

12. Sensor apparatus according to one of claims 1 to 11,
**characterized in**
**that** the 360°-sensor (20) is formed as a 360°-line sensor or as a 360°-area sensor.

13. Sensor apparatus according to one of claims 1 to 12,
**characterized in**
**that** the 360°-sensor (20) is configured to provide the two-dimensional image with a predetermined frequency between 0,1 Hz and 10 Hz, preferably with 5 Hz.

14. Sensor apparatus according to one of claims 1 to 13,
**characterized in**
**that** the 360°-sensor (20) is configured to provide, by means of the provided two-dimensional images, a continuous azimuth coverage.

15. Sensor apparatus according to one of claims 1 to 14,
**characterized in**
**that** the 360°-sensor (20) is configured to provide an adjustable elevation coverage in a range between -20° and 30° or between 10° and 20°.

## Revendications

1. Dispositif de capteur (10) pour la détection tridimensionnelle d'objets cibles, comprenant :
un capteur 360° (20) configuré pour détecter des rayonnements électromagnétiques pour fournir des images bidimensionnelles d'un entourage du capteur 360° (20),
une unité de détection (30) pour détecter des objets cibles spécifiques dans les images bidimensionnelles fournies par le capteur 360° (20), et
un télémètre à laser (40) pour déterminer une distance respective de l'objet cible respectif, le télémètre à laser (40) comprenant :
une diode laser (41) pour l'émission d'un faisceau laser (L1),
un miroir (42) pour réfléchir le faisceau laser (L1) émis sur l'objet cible respectif, et
un actionneur piézoélectrique (43) configuré pour régler le miroir (42) au moins en élévation de telle sorte que le faisceau laser (L2) réfléchi par le miroir (42) éclaire l'objet cible respectif,
dans lequel le capteur 360° (20) et le télémètre laser (40) ont un axe de rotation commun (R).

2. Dispositif de capteur selon la revendication 1,
**caractérisé par**
une unité de sortie (50) configurée pour produire une image tridimensionnelle de l'entourage avec les objets cibles déterminés et leurs distances respectives au moyen des images bidimensionnelles fournies par le capteur 360° (20) et au moyen des distances déterminées par le télémètre laser (40).

3. Dispositif de capteur selon la revendication 1 ou 2,
**caractérisé en ce que**
le télémètre laser (40) comprend une photodiode (44) pour recevoir au moins une partie d'un faisceau laser (L3) rétrodiffusé par l'objet cible.

4. Dispositif de capteur selon la revendication 3,
**caractérisé en ce que**
le télémètre laser (40) comprend une unité de détermination (45) configurée pour déterminer la distance de l'objet cible respectif en fonction de la partie du faisceau laser (L3) rétrodiffusée par l'objet cible qui est reçue par la photodiode (44).

5. Dispositif de capteur selon la revendication 3 ou 4,
**caractérisé en ce que**
la photodiode (44) est disposée à l'extérieur sur un boîtier (46) du télémètre laser (40).

6. Dispositif de capteur selon l'une des revendications 3 à 5,
**caractérisé en ce que**
la photodiode (44) et le miroir (42) sont disposés l'un par rapport à l'autre de telle sorte qu'au moins une partie du faisceau laser (L3) rétrodiffusé par l'objet cible soit déviée par le miroir (42) sur la photodiode (44).

7. Dispositif de capteur selon la revendication 3 ou 4,
**caractérisé en ce que**
la photodiode (44) est disposée sur le miroir (42).

8. Dispositif de capteur selon l'une des revendications 1 à 7,
**caractérisé en ce que**
l'actionneur piézoélectrique (43) est configuré pour aligner le miroir (42) en élévation et en azimut de telle sorte que le faisceau laser (L2) réfléchi par le miroir (42) éclaire l'objet cible respectif.

9. Dispositif de capteur selon l'une des revendications 1 à 8,
**caractérisé en ce que**
le télémètre laser (40) est configuré pour émettre le faisceau laser (L1, L2) avec une pluralité N de signatures codées pour différencier une pluralité N d'objets cibles.

10. Dispositif de capteur selon l'une des revendications 1 à 9,
**caractérisé en ce que**
le capteur 360° (20) et le télémètre laser (40) sont disposés de manière centrée l'un par rapport à l'autre.

11. Dispositif de capteur selon l'une des revendications 1 à 10,
**caractérisé en ce que**
la diode laser (41) est configurée pour émettre et recevoir le faisceau laser (L1) avec une longueur d'onde d'au moins 700 nm, de préférence d'au moins 850 nm, et plus préférablement d'au moins 1100 nm.

12. Dispositif de capteur selon l'une des revendications 1 à 11,
**caractérisé en ce que**
le capteur 360° (20) est formé comme un capteur linéaire 360° ou comme un capteur de surface 360°.

13. Dispositif de capteur selon l'une des revendications 1 à 12,
**caractérisé en ce que**
le capteur 360° (20) est configuré pour fournir l'image bidimensionnelle à une fréquence prédéterminée entre 0,1 Hz et 10 Hz, de préférence à 5 Hz.

14. Dispositif de capteur selon l'une des revendications 1 à 13,
**caractérisé en ce que**
le capteur 360° (20) est configuré pour fournir une couverture azimutale continue avec les images bidimensionnelles fournies.

15. Dispositif de capteur selon l'une des revendications 1 à 14,
**caractérisé en ce que**
le capteur 360° (20) est configuré pour fournir une couverture d'élévation réglable dans une plage comprise entre -20° et 30° ou entre 10° et 20°.
